# EUROPEAN PATENT APPLICATION

(11) **EP 1 452 669 A2**
(43) Date of publication of application: **01.09.2004**
(21) Application number: 03022876.1
(22) Date of filing: 08.10.2003
(51) Int. Cl.: E04G 21/32

(54) **A wedge arrangement**

(30) Priority: 26.02.2003 GB 0304392
(71) Applicant: SGB Services Limited, Leatherhead, Surrey KT22 7SG (GB)
(72) Inventor: Taylor, Mark, Brighton East Sussex BN1 5FF (GB)
(74) Representative: Parry, Simon James

(57) **Abstract**

A wedge arrangement is disclosed for moving two elements (2,3) relative to one another. The wedge arrangement has a first and second (24,5) element which are moveable relative to one another, the first element (24) having a guide aperture (28) defining a plurality of guide recesses (29) and the second element having a bearing surface. A wedge component (32) is received within the guide aperture (28) for movement relative to the first and second elements (24,5), the wedge element (32) having an elongate guide and a bearing edge (35,34), the elongate guide and the bearing edge (35,34) being divergent. The bearing edge (34) is configured to bear against the bearing surface (23) of the second element (5), and the elongate guide is configured to engage and slide within each said recess (29) of the guide aperture (28) so that movement of the wedge component (32) relative to the first element (24) drives said recess (29) and the bearing surface (34) apart thereby moving the first and second elements (24,5) relative to one another. The wedge component (32) is configured to allow the elongate guide to be selectively engaged with any one of said recesses (29) for sliding movement therein.

## Description

**THE PRESENT INVENTION** relates to a wedge arrangement and, more particularly, relates to a wedge arrangement for moving two elements relative to one another. The present invention also relates to a clamp arrangement comprising the wedge arrangement, and to a scaffolding connection comprising the clamp arrangement.

In the field of scaffolding, it is often necessary to erect guard rails in order to provide a safe working environment for people working at raised positions on the scaffolding assembly. It is often desirable to mount such a guard rail directly to a substantially horizontal scaffold member or other structural beam such as, for example, an I-section beam or similar. It is therefore desirable to provide a plurality of guard rail support posts, each of which is releasably connectable to the beam so as to extend substantially vertically and to support, at their upper ends, a horizontal beam defining the guard rail.

However, as will be appreciated, such horizontal structural beams can take many different forms and have varying dimensions. It is therefore desirable to provide each guard rail support post with a clamping arrangement configured to clampingly secure the support post to structural beams of varying dimensions.

It is therefore an object of the present invention to provide an improved scaffolding connection, and an improved clamp arrangement for use in the scaffolding connection. However, it is another object of the present invention to provide a simple and convenient wedge arrangement suitable for moving two elements relative to one another which arrangement could, for example, have applications outside the scaffolding field.

Accordingly, the present invention provides a wedge arrangement for moving two elements relative to one another, the arrangement comprising:
a first and a second element moveable relative to one another, the first element having a guide aperture defining a plurality of guide recesses and the second element having a bearing surface; and
a wedge component received within said guide aperture for movement therein relative to the first and second elements, the wedge element having an elongate guide and a bearing edge, the elongate guide and the bearing edge being divergent; wherein
the bearing edge is configured to bear against the bearing surface of the second element, and the elongate guide is configured to engage and slide within each said recess of the guide aperture so that movement of the wedge component relative to the first element drives said recess and the bearing surface apart thereby moving the first and second elements relative to one another;
the wedge component being configured to allow the elongate guide to be selectively engaged with any one said recesses for sliding movement therein.

Preferably, said guide aperture is in the form of an elongate slot, and wherein said recesses are spaced apart from one another along at least one side of the slot.

Advantageously, said wedge comprises a substantially planar part slidably received within said slot and wherein said elongate guide comprises a flange extending outwardly from said substantially planar part for engagement within said recesses.

Conveniently, said guide edge is defined by the edge of said planar part.

Preferably, said wedge component is held captive within said guide aperture.

Advantageously, said wedge component comprises a pair of spaced apart retaining projections, each said retaining projection being sized so as not to pass through said guide aperture.

Conveniently, at least one of said retaining projections is spaced from an end of said elongate guide, to allow the elongate guide to be removed one from said recess and received within another said recess.

According to another aspect of the present invention, there is provided a clamp arrangement comprising a wedge arrangement as set out above, wherein said first element defines part of a first clamping member and said second element defines part of a second clamping member, the two clamping members each having a respective clamping surface and being arranged so that said clamping surfaces are moved towards one another as said wedge component drives said recess of the guide aperture and bearing surface of the second element apart.

Preferably, said second clamping member comprises a channel to receive the first clamping member for sliding movement therein.

Advantageously, said bearing surface of the second element is defined by one end of said channel.

According to another aspect of the present invention, there is provided a scaffolding connection comprising a clamp arrangement as defined above, wherein said second clamping member carries a first scaffold component and wherein clamping engagement of said clamping surfaces about part of a second scaffold component serves to connect said first and second scaffold components.

Preferably, said first scaffold component is a post and said second scaffold component is an elongate beam.

So that the invention may be more readily understood, and so that further features thereof may be appreciated, an embodiment of the invention will now be described, by way of example, with reference to the accompanying drawings, in which:-
FIGURE 1 is a perspective view of a scaffolding connection comprising a clamp arrangement and wedge arrangement in accordance with the present invention;
FIGURE 2 is a schematic elevational view of the arrangement illustrated in Figure 1; and
FIGURE 3 is a top plan view of the arrangement illustrated in Figures 1 and 2, but illustrating the arrangement with a wedge component removed.

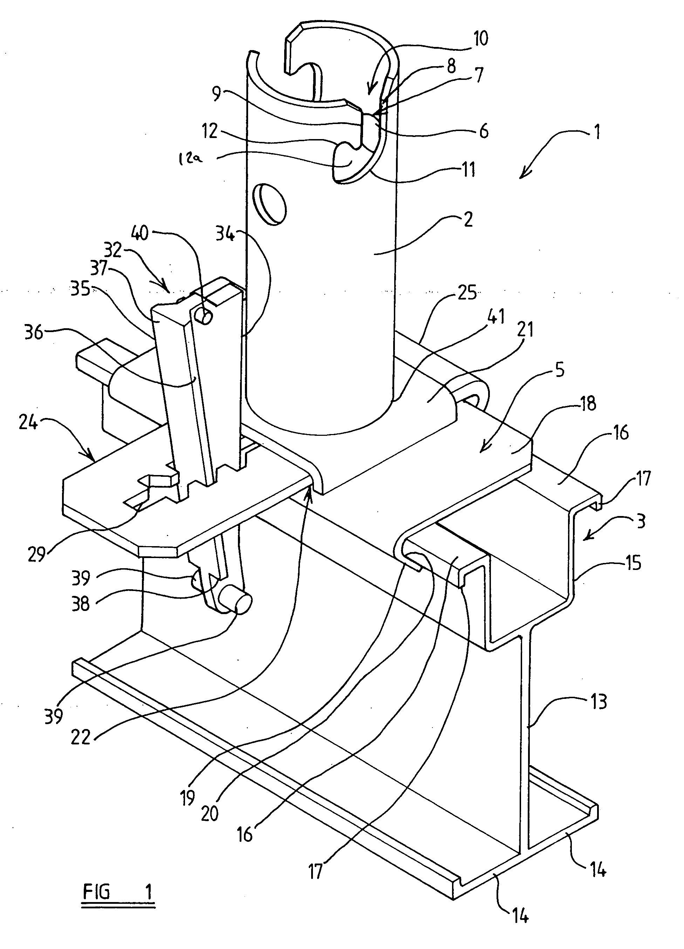

Referring initially to Figure 1 of the accompanying drawings, there is illustrated a scaffolding connection 1 comprising a first scaffolding component in the form of an upstanding post 2 and a second scaffolding component in the form of an elongate beam 3.

The upstanding post 2 takes the form of a length of cylindrical scaffold tube which is secured, for example by welding, at its lowermost end 4 to a clamping member 5 which will be described in more detail hereinafter. At its upper end, the post 2 is provided with a slot 6 formed in the side wall of the post 2. The slot 6 comprises a substantially uniform passage 7 having a first side wall 8 and a second side wall 9. The axis of the passage 7 is aligned with the longitudinal axis of the post 2. The side walls 8, 9 are opposed and spaced apart. The uppermost ends of the side walls 8, 9 lead to a diverging mouth 10, the diverging mouth 10 opening into the upper end 5 of the post 2.

At a point located a predetermined distance below the diverging mouth 10, the first side wall 8 merges with a wall region 11 that is curved inwardly across the axis of the passage 7. The curved wall region 11 has a substantially uniform radius of curvature which is greater than the width of the passage 7. The curved wall region 11 extends completely across the width of the passage 15. At the predetermined point below the diverging mouth 10, the other side wall 9 extends, with a very short radius of curvature, away from the axis of the slot 7 and continues to form the recessed base 12 of a pocket 12a, the upper boundary of which is defined by a continuation of the curved wall 11. The height and width of the pocket 12a are each slightly greater than the width of the passage 7. The pocket 12a is offset to one side of the passage 7, and the base 12 of the pocket 12a is located on the side of the pocket closest to the end of the post 2.

Another slot corresponding in form to that of slot 7 is formed on the diametrically opposing wall of the post 2.

The upstanding post 2 is configured to receive the lower end of a guard rail support post (not shown). The two above-described slots formed at the upper end of the post 2 are configured to receive and engage a pair of respective outwardly-directed spigots carried by the guard rail support post and to provide a secure, releasable connection between the guard rail support post and the upstanding post 2 as the guard rail support post is turned with respect to the upstanding post 2 such that the outwardly-directed spigots are each received within a respective pocket of each slot.

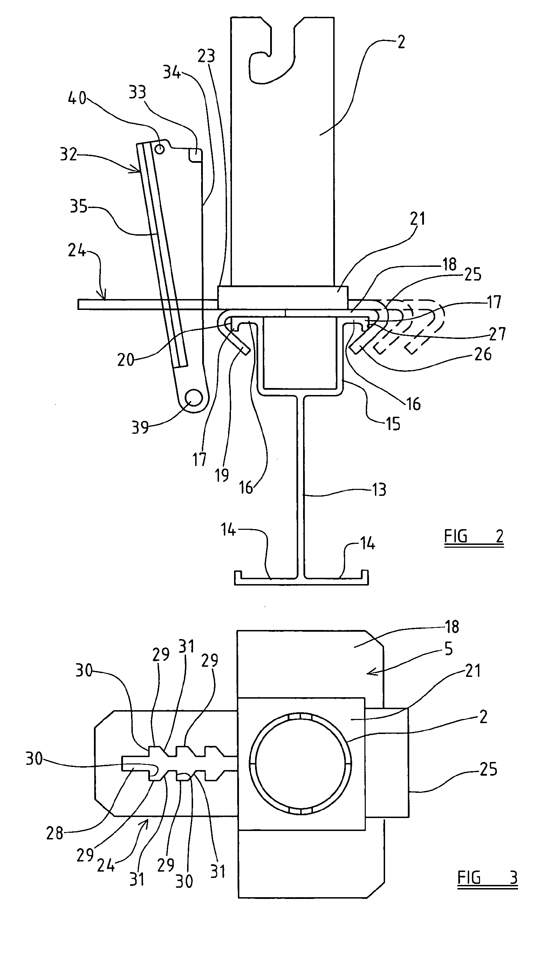

As will be particularly clear from Figure 2, the elongate beam 3 has a generally y-shaped cross-section, although, as will be appreciated, the invention can be used with beams of other convenient configurations. The illustrated beam 3 comprises a central web 13 having a pair of outwardly-directed flanges 14 extending from its lowermost edge. The uppermost part of the central web 13 carries a U-shaped channel 15 which is open in its uppermost region and which has a pair of outwardly-directed, parallel flanges 16. The outermost edge of each outwardly-directed flange 16 carries a downwardly-turned lip 17.

The clamping member 5 to which the upstanding post 2 is mounted, comprises a substantially planar metal plate 18 of generally rectangular form. One longitudinal edge of the plate 18 is turned downwardly so as to define a downwardly and inwardly-directed clamping flange 19 whose inner surface defines a clamping surface 20.

A second metal plate 21 is mounted on top of the metal plate 18. The second metal plate 21 is bent into a convenient U-shaped channel and is secured to the first plate 18 by, for example, welding, so as to define a channel 22 between the first plate 18 and the second plate 21. As illustrated most clearly in Figure 2, one end 23 of the channel 22 is aligned with the bent region of the first plate 18 defining the clamping flange 19. The end 23 of the channel 22, and the outer surface bent part of the first plate 18 located therebelow, both define bearing surfaces, the purpose of which will become clear hereinafter.

The clamping arrangement illustrated in Figures 1 to 3 further comprises another clamping member 24 which will hereinafter be referred to as the "first" clamping member, with the other clamping member 5 hereinafter being referred to as the "second" clamping member.

The first clamping member 24 essentially takes the form of an elongate rectangular metal plate which is bent at one end 25 so as to define a downwardly and inwardly-directed clamping flange 26 having generally identical form as, but being shorter than, the clamping flange 19 defined by the second clamping member 5. The clamping flange 26 of the first clamping member 24 defines another inwardly-directed clamping surface 26.

At its end located remote from the clamping flange 26, the first clamping member 24 is provided with a guide aperture 28 therethrough, which is illustrated most clearly in Figure 3. As will be seen from Figure 3, the guide aperture 28 takes the form of an elongate slot, but is provided with a number of spaced-apart recesses 29 along each longitudinal edge of the slot. Each recess 29 formed along one longitudinal edge of the slot is aligned with a corresponding recess 29 formed along the opposite longitudinal edge of the slot. Each recess 29 defines a shoulder 30 arranged so as to be substantially perpendicular to the longitudinal axis of the slot, and on opposing sloping edge 31. The sloping edge 31 of each recess 29 is located between the shoulder 30 of that recess and the bent end 25 of the first clamping member 24.

As illustrated in Figures 1 and 2, a wedge component 32 is slidably received within the guide aperture 28 for movement therein relative to both the first and second clamping members 24, 5. The wedge component 32 is elongate, and generally triangular in form. As will be seen from Figure 2, the main body of the wedge component 32 takes the form of a substantially scalene right-angled triangle. The longer of the two sides separated by the right-angle 33 defines an elongate bearing edge 34. The hypotenuse edge of the wedge component 32 carries an elongate guide flange 35 which, as illustrated most clearly in Figure 1, extends outwardly from both side faces of the triangular plate defining the body of the wedge component 32. The outwardly-directed regions of the guide flange 35 each define an outermost guide surface 36, and a sloping guide surface 37.

At the lowermost end of the wedge component 32, as illustrated in Figures 1 and 2, the wedge component 32 has a short extension 38 which extends beyond the lowermost extent of the guide flange 35. At a position spaced below the lowermost end of the guide flange 35, the extension 38 carries a pair of aligned and outwardly-directed retaining projections 39 which take the form of cylindrical spigots.

At the uppermost end of the wedge component 32, a pair of similarly-aligned, but slightly smaller retaining projections 40 are provided, each of which extends outwardly from the triangular plate defining the wedge component 32. The upper retaining projections 40 are spaced between the uppermost region of the guide flange 35 and the right-angle 33. Both the upper retaining projections 40 and the lower retaining projections 39 are sized so as not to pass through the guide aperture 28, and hence serve to retain the wedge component 32 captively within the guide aperture 28.

As illustrated in Figure 1, the outwardly-directed regions of the guide flange 35 are each configured to be received within a respective opposing recess 29 of the guide aperture 28. In particular, the outwardly-directed guide surfaces 36 of the wedge component 32 are configured to slidably bear against the outermost parts of each recess 29, whilst the sloping guide surfaces 37 are configured to bear slidably against the sloping edges 31 of each recess 29. It will therefore be appreciated from Figure 1, that when the guide flange 35 is engaged with a pair of opposing recesses 29 in this way, and the first clamping element 24 is arranged relative to the second clamping member 5 such that the bearing edge 34 of the wedge component 32 bears against the bearing surface 23 of the second clamping member then, if the wedge component 32 is driven downwardly (for example by being struck on its uppermost end with a hammer), then by acting between the shoulders 30 of the recesses 29 and the bearing surface 23, it will serve to move the clamping surface 27 of the first clamping member 24 towards the clamping surface 20 of the second clamping member 5, thereby trapping the outwardly-directed flanges 16 of the beam 13 between the two clamping surfaces.

Subsequent release of the clamping arrangement can be simply effected by striking the lowermost end of the clamping member 32 in an upwards direction with, for example, a hammer, thereby urging the clamping member 32 upwardly to release the first clamping member 24 and allow it to move towards the right as illustrated in the drawings, thereby allowing the clamping surfaces 26, 20 to move apart from one another and to release the beam 13.

However, it will be appreciated that when the guide flange 35 is engaged within a respective pair of opposing recesses 29, the arrangement provides only a limited range of movement of the clamping flange 26, and its associated clamping surface 27 relative to the opposite clamping surface 20. Therefore, when the guide flange 35 is engaged with a respective pair of opposing recesses 29, the clamping arrangement will only be effective in clamping against a beam 13 having a predetermined and limited range of width. Therefore, if it is desired to secure the clamping arrangement to a beam having a greater width than that illustrated in the drawings, then the clamping component 32 may be manipulated such that it is lifted to a point at which the guide flange 35 becomes disengaged with the opposing pair of recesses 29. In effect, this involves lifting the wedge component 32 until the first clamping member 24 becomes located between the lowermost end of the guide flange 35 and the lowermost retaining projections 39. The wedge component 32 can then be moved longitudinally along the guide slot 28 so that the guide flange 35 becomes aligned with another respective pair of opposing recesses, for example the left-most recesses located adjacent the left-hand end of the guide slot 28 as illustrated in the drawings. The wedge component 32 can then subsequently be lowered again such that the guide flange 35 becomes engaged with the new pair of opposing recesses 29 which will provide sufficient spacing between the bearing edge 34 of the wedge component 32 and the bearing surface 23 of the second clamping member 5 to allow the two clamping flanges 19, 26 to be moved apart a sufficient degree to receive therebetween a wider beam 13. Subsequent clamping of the arrangement about the beam 13 can then be effected by driving the wedge downwardly in the manner described above.

It will therefore be appreciated that because the guide aperture 28 is provided with a plurality of recesses 29 along each longitudinal edge of the slot, the arrangement provides a plurality of effective clamping widths. The particular arrangement illustrated comprises three opposing pairs of apertures 29 and hence provides three effective clamping widths. Figure 2 illustrates, in solid line, the clamping flange 26 of the first clamping component 24 in its narrowest clamping position, whilst illustrating two wider, alternate clamping positions in phantom.

It will therefore be appreciated that the above-described wedge arrangement and clamp arrangement provide a convenient mechanism to move the two clamping members 24, 5 relative to one another whilst allowing the accommodation of a number of different widths of beam 13 therebetween.

Whilst the present invention has been described above with reference to a specific embodiment, it should be appreciated that various modifications to the described arrangement could be made, without departing from the scope of the invention. For example, it is envisaged that the guide aperture 28, whilst still taking the form of an elongate slot, could be provided with recesses 29 only along one longitudinal edge, rather than along both longitudinal edges as illustrated in Figures 1 and 3. In such an arrangement, then the wedge component 32 could also be modified such that the guide flange 35 projects only to one side of the plate defining the wedge component 32.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A wedge arrangement for moving two elements relative to one another, the arrangement comprising:
a first and a second element moveable relative to one another, the first element having a guide aperture defining a plurality of guide recesses and the second element having a bearing surface; and
a wedge component received within said guide aperture for movement therein relative to the first and second elements, the wedge element having an elongate guide and a bearing edge, the elongate guide and the bearing edge being divergent; wherein
the bearing edge is configured to bear against the bearing surface of the second element, and the elongate guide is configured to engage and slide within each said recess of the guide aperture so that movement of the wedge component relative to the first element drives said recess and the bearing surface apart thereby moving the first and second elements relative to one another;
the wedge component being configured to allow the elongate guide to be selectively engaged with any one said recesses for sliding movement therein.

2. A wedge arrangement according to claim 1, wherein said guide aperture is in the form of an elongate slot, and wherein said recesses are spaced apart from one another along at least one side of the slot.

3. A wedge arrangement according to claim 2, wherein said wedge comprises a substantially planar part slidably received within said slot and wherein said elongate guide comprises a flange extending outwardly from said substantially planar part for engagement within said recesses.

4. A wedge arrangement according to claim 3, wherein said guide edge is defined by the edge of said planar part.

5. A wedge arrangement according to any preceding claim, wherein said wedge component is held captive within said guide aperture.

6. A wedge arrangement according to claim 5, wherein said wedge component comprises a pair of spaced apart retaining projections, each said retaining projection being sized so as not to pass through said guide aperture.

7. A wedge arrangement according to claim 6 wherein at least one of said retaining projections is spaced from an end of said elongate guide, to allow the elongate guide to be removed one from said recess and received within another said recess.

8. A clamp arrangement comprising a wedge arrangement according to any preceding claim, wherein said first element defines part of a first clamping member and said second element defines part of a second clamping member, the two clamping members each having a respective clamping surface and being arranged so that said clamping surfaces are moved towards one another as said wedge component drives said recess of the guide aperture and the bearing surface of the second element apart.

9. A clamp arrangement according to claim 8, wherein said second clamping member comprises a channel to receive the first clamping member for sliding movement therein.

10. A clamp arrangement according to claim 9, wherein said bearing surface of the second element is defined by one end of said channel.

11. A scaffolding connection comprising a clamp arrangement according to any one of claims 8 to 10, wherein said second clamping member carries a first scaffold component and wherein clamping engagement of said clamping surfaces about part of a second scaffold component serves to connect said first and second scaffold components.

12. A scaffolding connection according to claim 11, wherein said first scaffold component is a post and said second scaffold component is an elongate beam.
